# EUROPEAN PATENT APPLICATION

(11) **EP 4 760 138 A1**
(43) Date of publication of application: **17.06.2026**
(21) Application number: 24894347.4
(22) Date of filing: 24.09.2024
(51) Int. Cl.: F16M 11/22, F16M 11/42, H02J 50/10, H01M 10/46

(54) **STAND AND DISPLAY APPARATUS HAVING SAME**

(30) Priority: 21.11.2023 KR 20230162758
(71) Applicant: Samsung Electronics Co., Ltd., Suwon-si, Gyeonggi-do 16677 (KR)
(72) Inventor: KIM, Dongwook, Suwon-si Gyeonggi-do 16677 (KR); KIM, Jeewon, Suwon-si Gyeonggi-do 16677 (KR); MOON, Sinwi, Suwon-si Gyeonggi-do 16677 (KR); LEE, Jaeneung, Suwon-si Gyeonggi-do 16677 (KR)
(74) Representative: Gulde & Partner
(86) International application number: PCT/KR2024/014339
(87) International publication number: WO 2025/110451

(57) **Abstract**

A display apparatus according to an embodiment includes a display and a stand on which the display is mountable. The stand includes a stand panel couplable to the display, and a plurality of legs couplable to the stand panel. The stand is configured to be switchable between a first state which each of four legs of the plurality of legs is coupled to the stand panel and is configured to support the stand panel so that the display is supported in four directions of the four legs, respectively, and a second state which each of three legs of the plurality of legs is coupled to the stand panel and is configured to support the stand panel so that the display is supported in three directions of the three legs, respectively.

## Description

### [Technical Field]

The disclosure relates to a stand and a display apparatus having the same.

### [Background Art]

A display device is a type of output device that converts acquired or stored electrical information into visual information and displays such information to users.

The display device may include televisions (TVs), monitors, and portable devices, such as laptop personal computers (PCs), smartphones, and tablet PCs.

The display device may include a display for displaying an image and a stand for supporting the display.

### [Disclosure]

### [Technical Problem]

An aspect of the present disclosure provides a stand with improved ease of use and a display apparatus having the same.

An aspect of the present disclosure provides a stand capable of being be transformed into various shapes and a display apparatus having the same.

An aspect of the present disclosure provides a stand capable of being used in a variety of spaces and/or environments and a display apparatus having the same.

Technical tasks to be achieved in this document are not limited to the technical tasks mentioned above, and other technical tasks not mentioned will be clearly understood by those skilled in the art from the description below.

### [Technical Solution]

According to an embodiment of the present disclosure, a display apparatus includes a display; and a stand on which the display is mountable. The stand includes a stand panel couplable to the display and a plurality of legs couplable to the stand panel. The stand includes a first state which each of four legs of the plurality of legs is coupled to the stand panel and is configured to support the stand panel so that the display is supported in four directions of the four legs, respectively. The stand includes a second state which each of three legs of the plurality of legs is coupled to the stand panel and is configured to support the stand panel so that the display is supported in three directions of the three legs, respectively. The stand is configured to be switchable between the first state and the second state.

While the stand is in the first state, first ends of the four legs of the plurality of legs may be each coupled to a lower side of the stand panel, and second ends of the four legs of the plurality of legs form a quadrangle.

While the stand is in in the second state, first ends of the three legs of the plurality of legs may be each coupled to a lower side of the stand panel, and second ends of the three legs of the plurality of legs form a triangle.

The stand may be switchable from the first state to a third state or the second state to the third state, and may be switchable from the third state to the first state or the third state to the second state, while the stand is in the second state, the display may be positioned in a first position, and while the stand is in the third state, each of three legs of the plurality of legs may be coupled to the stand panel and is configured to support the stand panel so that the display is supported in three directions of the three legs, respectively, and the display is positioned in a second position which is higher than the first position.

While the stand is in the third state, one leg of the plurality of legs may be coupled to a lower side of the stand panel, and each of the three legs of the plurality of legs, except for the one leg, supports the one leg.

The stand may further comprise a hub configured to connect to the stand panel and to the three legs of the plurality of legs while the stand is in the second state, or to connect to the one leg of the plurality of legs and to the three legs of the plurality of legs while the stand is in the third state.

The hub may comprise: a hub body, a first connection portion protruding upwardly from the hub body, a second connection portion protruding downwardly from the hub body, a third connection portion protruding downwardly from the hub body and spaced apart from the second connection portion, and a fourth connection portion protruding downwardly from the hub body and spaced apart from the second connection portion and the third connection portion.

The stand panel may be electrically connectable to the display.

The stand panel may further comprise a battery configured to supply power to the display.

The stand panel may further comprise a solar cell configured to generate power from sunlight to the charge the battery.

The stand panel may be configured to wirelessly charge at least one electronic device placed on the stand panel.

The display may comprise: a display panel configured to display an image; a cover configured to cover a rear side of the display panel; and a first coupling portion protruding from the cover.

The stand panel may comprise: a second coupling portion configured to receive at least a portion of the first coupling portion.

In response to the display slidably moving downwardly relative to the stand, at least a portion of the first coupling portion may be configured to be inserted into the second coupling portion, and in response to the display slidably moving upwardly relative to the stand, at least a portion of the first coupling portion may be configured to be removed from the second coupling portion.

The first coupling portion may comprise: a coupling body inserted into the cover, a coupling neck extending from the coupling body, and a coupling head extending from the coupling neck and having a larger size than a size of the coupling neck.

The second coupling portion may comprise: a first coupling groove to receive the coupling neck, and a second coupling groove to receive the coupling head.

The display may include a pair of long sides and a pair of short sides, and the stand panel extends along a long side direction of the display.

The stand panel may be couplable to a rear side of the display.

A stand on which a display is mountable, the stand may comprise: a stand panel couplable to the display; a plurality of supporting bars couplable to the stand panel; and wherein the stand is configured to be switchable between: a first state which each of four supporting bars of the plurality of supporting bars is coupled to the stand panel and is configured to support the stand panel so that the display is supported in four directions of the four supporting bars, respectively; and a second state which each of three supporting bars of the plurality of supporting bars is coupled to the stand panel and is configured to support the stand panel so that the display is supported in three directions of the three supporting bars, respectively.

The stand may further comprise a hub connectable to any one of the four supporting bars and the remaining three supporting bars of the four supporting bars.

The stand may further comprise a hub connectable to the stand panel and the three supporting bars of the four supporting bars.

### [Description of Drawings]

FIG. 1 illustrates a display apparatus according to an embodiment.
FIG. 2 illustrates a display according to an embodiment.
FIG. 3 illustrates a stand according to an embodiment.
FIG. 4 illustrates a stand panel according to an embodiment.
FIG. 5 illustrates a configuration of the stand panel according to an embodiment.
FIG. 6 illustrates the display apparatus according to an embodiment.
FIG. 7 illustrates the display apparatus shown in FIG. 6 from below.
FIG. 8 illustrates the display apparatus shown in FIG. 7 disassembled.
FIG. 9 illustrates a display apparatus according to an embodiment.
FIG. 10 illustrates the display apparatus shown in FIG. 9 from below.
FIG. 11 illustrates the display apparatus shown in FIG. 10 disassembled.
FIG. 12 illustrates a display apparatus according to an embodiment.
FIG. 13 illustrates the display device shown in FIG. 12 from below.
FIG. 14 illustrates the display apparatus shown in FIG. 13 disassembled.
FIG. 15 illustrates a display and a stand, according to an embodiment.
FIG. 16 illustrates a portion of the stand cut away, according to an embodiment.
FIG. 17 illustrates a display and a stand coupled together, according to an embodiment.
FIG. 18 illustrates an enlarged view of a portion of FIG. 17.
FIG. 19 illustrates the display and the stand shown in FIG. 18 coupled together.
FIG. 20 illustrates a plan cross-sectional view of the display and the stand coupled, according to an embodiment.
FIG. 21 illustrates a side cross-sectional view of the display and the stand coupled, according to an embodiment.
FIG. 22 illustrates a display device according to an embodiment.
FIG. 23 illustrates a display and a stand, according to an embodiment.

### [Modes of the Invention]

Embodiments described in the disclosure and configurations shown in the drawings are merely examples of the embodiments of the disclosure and may be modified in various different ways at the time of filing of the present application to replace the embodiments and drawings of the disclosure.

In connection with the description of the drawings, similar reference numerals may be used for similar or related components.

The singular form of a noun corresponding to an item may include one or a plurality of the items unless clearly indicated otherwise in a related context.

In this document, phrases, such as "A or B", "at least one of A and B", "at least one of A or B," "A, B or C," "at least one of A, B and C," and "at least one of A, B, or C", may include any one or all possible combinations of items listed together in the corresponding phrase among the phrases.

As used herein, the term "and/or" includes any and all combinations of one or more of associated listed items.

The terms "part", "portion", "block", "unit", "module", "member", and the like may include a unit that handles at least one function or operation. In some embodiments, a plurality of "parts", "portions", "blocks", "units", "modules", and "members" may be implemented as a single component, or a single "part", "portion", "block", "unit", "module", and "member" may comprise a plurality of components. The terms may be implemented in hardware and/or software. The terms may refer to at least one piece of hardware, at least one piece of software stored in memory, or at least one process processed by a processor.

Terms such as "1st", "2nd", "primary", or "secondary" may be used simply to distinguish a component from other components, without limiting the component in other aspects (e.g., importance or order).

When a component (e.g., a first component) is referred to as "coupled" or "connected" to another component (e.g., a second component), with or without the terms "functionally" or "communicatively," it may refer to that the component may be connected to another component directly (e.g., wired), wirelessly, or through a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

It will be understood that when a certain component is referred to as being "connected to", "coupled to", "supported by" or "in contact with" another component, it can be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a component is referred to as being "on" or "over" another component, it can be directly on the other component or intervening components may also be present.

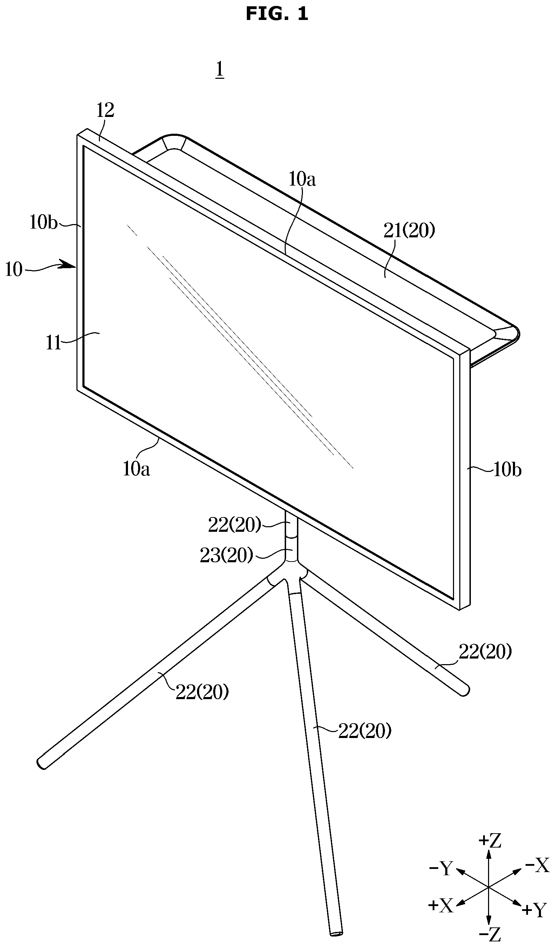

As used herein, the terms "front", "rear", "upper", "lower", "left", "right", "vertical", "lateral", and the like may be defined with reference to the drawings. For example, with reference to a display apparatus 1 shown in FIG. 1, a side on which an image is displayed may be defined as a front side (+X side) and a side opposite thereto may be defined as a back side (-X side). For example, with reference to the drawings, the right side may be defined as the +Y side and the left side may be defined as the -Y side. For example, with reference to the drawings, the upper side may be defined as the +Z side and the lower side may be defined as the -Z side. However, the above terms do not limit the shape and position of each component.

Hereinafter, an embodiment of the disclosure will be described in detail with reference to the accompanying drawings.

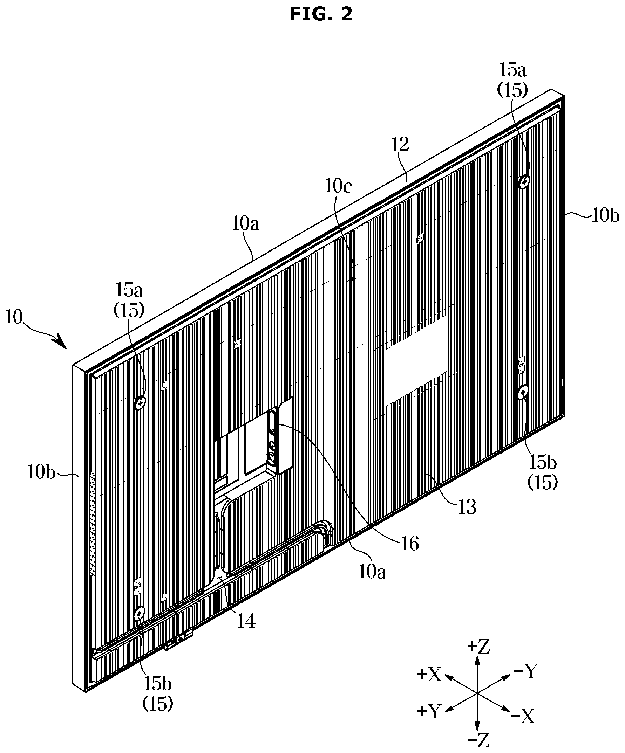

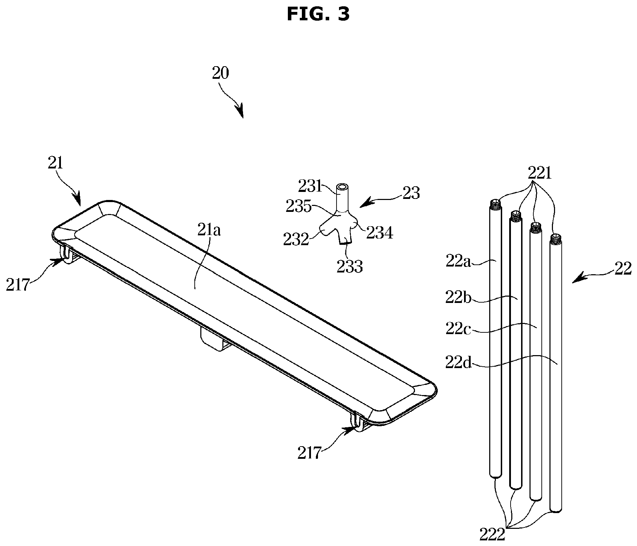

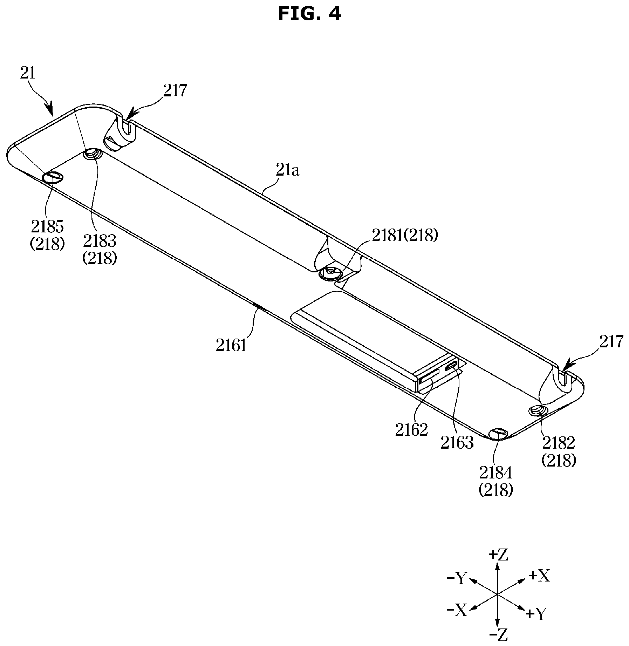

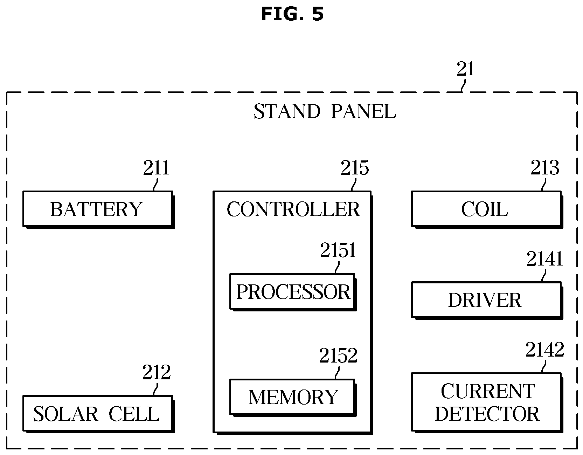

FIG. 1 shows a display apparatus according to an embodiment. FIG. 2 shows a display according to an embodiment. FIG. 3 shows a stand according to an embodiment. FIG. 4 shows a stand panel according to an embodiment. FIG. 5 shows a configuration of the stand panel according to an embodiment.

Referring to FIGS. 1 and 2, the display apparatus 1 may include a display 10.

The display 10 may be a device that displays information, materials, data, and the like in the form of text, shapes, graphics, images, and the like. For example, the display 10 may be implemented as a monitor, television, smart phone, tablet personal computer (PC), or the like.

The display 10 may include a display panel 11. The display panel 11 may be provided to display an image (e.g., photo, video). A screen display area may be formed on a front surface of the display panel 11. A plurality of pixels may be formed in the screen display area, and a screen displayed on the screen display area may be formed by a combination of light emitted from the plurality of pixels. For example, one screen may be formed on the screen display area by combining light emitted from the plurality of pixels, such as in a mosaic.

The display 10 may include a self-emissive display panel and/or a non-emissive display panel. For example, the display panel 11 may be an organic light-emitting diode (OLED), a liquid crystal display (LCD), or a micro light-emitting diode (MLED). However, the present disclosure is not limited to the examples described above. There is no particular limitation on the type of display panel 11, and the display 10 may include different types of display panels 11.

The display 10 may include a chassis configured to support and/or hold the display panel 11. The chassis may accommodate components for performing various functions of the display 10. For example, the chassis may be provided in the form of an assembly in which a plurality of components are combined. The chassis may be referred to as a mold, housing, case, or the like.

The display 10 may include a frame 12. The frame 12 may be provided to cover each edge of the display panel 11. The frame 12 may be provided as a configuration of a chassis.

The display 10 may include a cover 13. The cover 13 may be provided to cover a rear side of the display panel 11. The cover 13 may be provided as a configuration of the chassis.

For example, the frame 12 and the cover 13 may be arranged in separate configurations and then coupled together. For example, the frame 12 and the cover 13 may be formed integrally.

For example, the display 10 may include a pair of long sides 10a and a pair of short sides 10b. The display 10 may be arranged to have different lengths of horizontal and vertical sides. The display 10 may include a substantially rectangular shape. However, the present disclosure is not limited thereto, and the length of the horizontal side and the length of the vertical side of the display 10 may be the same. In this case, the display 10 may have a substantially square shape.

Although the display 10 is shown in the drawings as being a flat display, but the present disclosure is not limited thereto. The display 10 may be a curved display or a variable (i.e., bendable or flexible) display that is capable of being in a flat state and in a curved state.

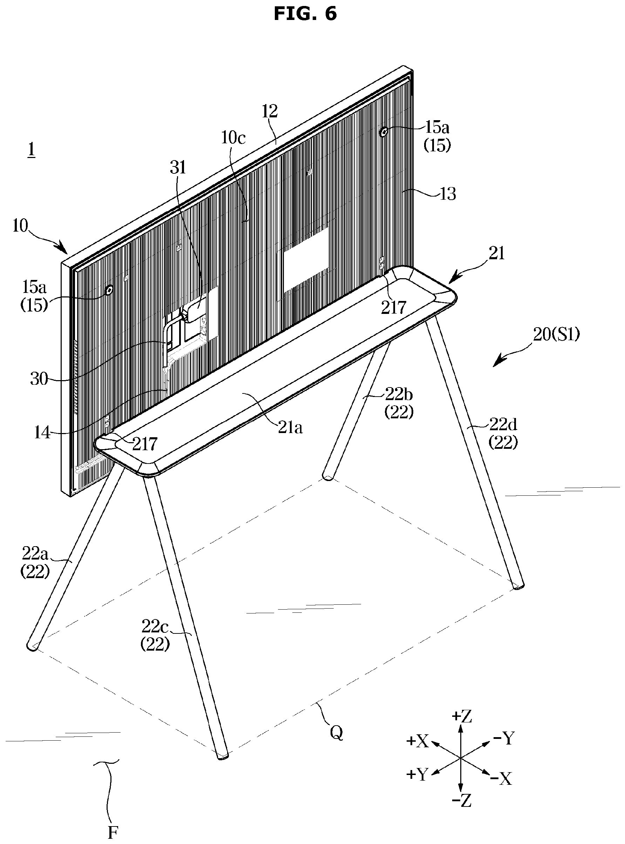

The display 10 may include a guide groove 14. The guide groove 14 may guide at least one cable (e.g., a cable 30 (see FIGS. 6 to 14)) connected to the display 10. The at least one cable may be inserted into the guide groove 14. As a result, when electrically connecting the display 10 and a stand 20 (or other device), which will be described later, the at least one cable may be inserted into the guide groove 14 to avoid interfering with other components or becoming tangled. The at least one cable arranged between the display 10 and the stand 20 (or other devices) may be neatly organized.

The guide groove 14 may be disposed in a rear side 10c of the display 10. The guide groove 14 may be formed by recessing a portion of the cover 13.

The display 10 may include at least one ports. For example, the at least one ports may receive power from an external source. For example, the at least one ports may be arranged to transmit and receive different signals. The at least one ports may be implemented as input terminals and/or an output terminals of the display 10. As will be described later, one end 31 of the cable 30 may be connected to a port 16 of the display 10.

The display 10 may include a first coupling portion 15. The first coupling portion 15 of the display 10 may be coupled to a second coupling portion 217 of the stand 20, which will be described later. The first coupling portion 15 of the display 10 may be mounted to the second coupling portion 217 of the stand 20. The first coupling portion 15 of the display 10 may be mounted to the second coupling portion 217 of the stand 20.

For example, the first coupling portion 15 may include at least one of an upper coupling portion 15a or a lower coupling portion 15b. In the drawings, two upper coupling portions 15a are shown and two lower coupling portions 15b are shown, but the present disclosure is not limited thereto. The first coupling portion 15 may include a plurality of upper coupling portions 15a and a plurality of lower coupling portions 15b. The first coupling portion 15 may include a plurality of upper coupling portions 15a and a single lower coupling portion 15b. The first coupling portion 15 may include a single upper coupling portion 15a and a plurality of lower coupling portions 15b. The first coupling portion 15 may include a single upper coupling portion 15a and a single lower coupling portion 15b. The number of upper coupling portions 15a is not limited. The number of lower coupling portions 15b is not limited. Either the upper coupling portion 15a or the lower coupling portion 15b may be omitted.

The upper coupling portion 15a and the lower coupling portion 15b may have substantially the same shape and configuration except for their positions. The upper coupling portion 15a may be provided at a relatively higher position than the lower coupling portion 15b. The lower coupling portion 15b may be provided at a relatively lower position than the upper coupling portion 15a. Depending on which of the upper coupling portion 15a and the lower coupling portion 15b is coupled to the second coupling portion 217, the height of the display 10 may vary. This will be described in more detail later.

Referring to FIG. 1, and FIGS. 3 to 5, the display apparatus 1 may include the stand 20. The stand 20 may be referred to as a support device 20. The stand 20 may be referred to as a mounting device 20. The stand 20 may be referred to as a pedestal 20.

The stand 20 may be provided to hold the display 10. The stand 20 may be provided to support the display 10. The stand 20 may be provided to be detachably coupled to the display 10. The display 10 may be mounted to the stand 20. The display 10 may be provided to suspend the stand 20. For example, the stand 20 may be provided in an unassembled state (see FIG. 3). For example, the stand 20 may be stored in an unassembled state (see FIG. 3).

The stand 20 may include a stand panel 21. The stand panel 21 may be referred to as a shelf 21, a plate 21, a table 21, or the like.

The stand panel 21 may be couplable to the display 10. The stand panel 21 may be couplable to the rear side 10c of the display 10. The stand panel 21 may be detachably coupled to the rear side 10c of the display 10. The stand panel 21 may be detachably mounted to the rear side 10c of the display 10.

For example, the stand panel 21 may have a shape extending in one direction. For example, the stand panel 21 may have a shape extending along a substantially horizontal direction (Y direction). For example, the stand panel 21 may extend along the long side 10a of the display 10. However, the present disclosure is not limited to the examples described above, and the stand panel 21 may include a variety of shapes.

Various objects may be placed on the stand panel 21. An upper side 21a of the stand panel 21 may have a substantially flat shape. The stand panel 21 may serve as a type of shelf. For example, various objects, such as electronic devices, flower pots, books, glasses, toys, and the like, may be placed on the stand panel 21.

The stand panel 21 may include at least one ports 2161, 2162, and/or 2163. The at least one ports 2161, 2162, and/or 2163 may be provided to receive power or to transmit and receive various signals and the like.

The stand panel 21 may include the port 2161 arranged to receive power from an external source. For example, the port 2161 may receive power from an external power source. For example, the port 2161 may be electrically connected to a battery 211, which will be described later, and the battery 211 may be charged by power supplied through the port 2161.

The stand panel 21 may include the port 2162 for electrical connection with the display 10. For example, one end 31 of the cable 30 may be connected to the port 16 of the display 10, and the other end 32 of the cable 30 may be connected to the port 2161 of the stand panel 21 (see FIGS. 6 to 14). For example, the port 2162 may be electrically connected to the battery 211, and power stored in the battery 211 may be provided to the display 10 via the cable 30.

The stand panel 21 may include the port 2163 for electrical connection to an external device. For example, the port 2163 may be electrically connected to a peripheral device (not shown) (e.g., audio device, PC, tablet, mobile phone, game console, etc.). For example, one end of the cable (not shown) may be connected to the port 2163, and the other end of the cable (not shown) may be connected to a port on the peripheral device. The stand panel 21 and the external device may be configured to exchange different signals.

The stand panel 21 may include the second coupling portion 217. The second coupling portion 217 of the stand panel 21 may be couplable to the first coupling portion 15 of the display 10. The second coupling portion 217 of the stand panel 21 may support the first coupling portion 15 of the display 10. The second coupling portion 217 of the stand panel 21 may accommodate at least a portion of the first coupling portion 15 of the display 10. This will be described in more detail later.

The stand panel 21 may include a third coupling portion 218. A hub 23 and/or a leg 22, which will be described later, may be detachably coupled to the third coupling portion 218. The hub 23 and/or the leg 22, which will be described later, may be detachably assembled to the third coupling portion 218.

For example, the stand panel 21 may include a first coupling groove 2181. The first coupling groove 2181 may be provided on a lower side 21b of the stand panel 21. The first coupling groove 2181 may be formed by recessing the lower side 21b of the stand panel 21. For example, the first coupling groove 2181 may be provided approximately at a central portion along an extending direction of the stand panel 21. The first coupling groove 2181 may be provided as a configuration of the third coupling portion 218.

For example, the stand panel 21 may include a second coupling groove 2182. The second coupling groove 2182 may be provided on the lower side 21b of the stand panel 21. The second coupling groove 2182 may be formed by recessing the lower side 21b of the stand panel 21. For example, the second coupling groove 2182 may be formed at a front right corner of the lower side 21b of the stand panel 21. The second coupling groove 2182 may be provided as a configuration of the third coupling portion 218.

For example, the stand panel 21 may include a third coupling groove 2183. The third coupling groove 2183 may be provided on the lower side 21b of the stand panel 21. The third coupling groove 2183 may be formed by recessing the lower side 21b of the stand panel 21. For example, the third coupling groove 2183 may be formed at a front left corner of the lower side 21b of the stand panel 21. The third coupling groove 2183 may be provided as a configuration of the third coupling portion 218.

For example, the stand panel 21 may include a fourth coupling groove 2184. The fourth coupling groove 2184 may be provided on the lower side 21b of the stand panel 21. The fourth coupling groove 2184 may be formed by recessing the lower side 21b of the stand panel 21. For example, the fourth coupling groove 2184 may be formed at a rear right corner of the lower side 21b of the stand panel 21. The fourth coupling groove 2184 may be provided as a configuration of the third coupling portion 218.

For example, the stand panel 21 may include a fifth coupling groove 2185. The fifth coupling groove 2185 may be provided on the lower side 21b of the stand panel 21. The fifth coupling groove 2185 may be formed by recessing the lower side 21b of the stand panel 21. For example, the fifth coupling groove 2185 may be formed at a rear left corner of the lower side 21b of the stand panel 21. The fifth coupling groove 2185 may be provided as a configuration of the third coupling portion 218.

Referring to FIG. 5, the stand panel 21 may include the battery 211. The stand panel 21 may include a solar cell 212. The stand panel 21 may include a coil 213. The stand panel 21 may include a driver 2141. The stand panel 21 may include a current detector 2142. The stand panel 21 may include a controller. In some embodiments, the stand panel 21 may further include a configuration not shown in FIG. 5. In some embodiments, the stand panel 21 may not include at least a portion of the configurations shown in FIG. 5.

The stand panel 21 may be electrically connected to the display 10. For example, one end 31 of the cable 30 may be electrically connected to the display 10, and the other end 32 of the cable 30 may be electrically connected to the stand panel 21 (see FIGS. 6 to 14). For example, one end 31 of the cable 30 may be electrically connected to the port 16 of the display 10, and the other end 32 of the cable 30 may be electrically connected to the port 2162 of the stand panel 21.

The battery 211 may be provided to supply power to the display 10. The battery 211 may store power. The power stored in the battery 211 may be provided to the display 10. For example, the battery 211 may store power provided from an external power source. For example, the battery 211 may be charged by power received from an external power source. For example, the external power source may be electrically connected to the port 2161 of the stand panel 21. For example, the battery 211 may store power generated by the solar cell 212. For example, the battery 211 may be charged by power generated by the solar cell 212.

The battery 211 may store electrical energy in the form of chemical energy by converting electrical energy into chemical energy. The battery 211 may convert chemical energy into electrical energy and output electrical energy. The battery 211 may provide electrical energy to the display 10.

As the stand 20 includes the battery 211, the display apparatus 1 may be used in a variety of spaces and/or environments. The display 10 may receive power from the stand 20. The display 10 may not receive power directly from an external power source. A cable may not be required to connect the display apparatus 1 to an external power source. The display apparatus 1 may be used both indoors and outdoors. The display apparatus 1 may be free from spatial constraints. The display apparatus 1 may have a large degree of freedom.

The solar cell 212 may generate electricity from sunlight. The solar cell 212 may convert solar energy into electrical energy. For example, based on light being incident on a semiconductor, electrons and holes may be generated, and as the electrons and holes move, a current may flow resulting in electricity. For example, the solar cell 212 may include different types of semiconductors, such as silicon (Si), gallium arsenide (GaAs), copper indium gallium selenide (CIGS), and cadmium telluride (CdTe), and the like.

The solar cell 212 may be electrically connected to the battery 211. The power generated by the solar cell 212 may be stored in the battery 211. The battery 211 may be charged by the power generated by the solar cell 212. For example, a charging circuit (not shown) may be provided between the solar cell 212 and the battery 211.

The stand panel 21 may be configured to wirelessly charge at least one electronic device (not shown) (e.g., portable communication device, PC, tablet, wearable device, wireless earphone, and the like.) placed on the stand panel 21. For example, the stand panel 21 may be provided to charge the at least one electronic device (not shown) using a magnetic induction method or a magnetic resonance method. For example, the coil 213 of the stand panel 21 may provide wireless power to the at least one electronic device (not shown) placed on the stand panel 21. For example, in response to current being supplied to the coil 213, a magnetic field may be formed, which may generate an induced current to be generated in the coil embedded in the electronic device (not shown). As the induced current generated is supplied to a battery embedded in the electronic device (not shown), the electronic device (not shown) may be wirelessly charged. As a result, the stand panel 21 may function as a wireless charging pad.

The stand panel 21 may include the driver 2141. The driver 2141 may provide drive current to the coil 213. The driver 2141 may provide drive current to the coil 213 based on a control signal from the controller 215.

The stand panel 21 may include the current detector 2142. The current detector 2142 may be configured to detect the magnitude and/or direction of the drive current supplied to the coil 213. Information obtained from the current detector 2142 may be provided to the controller 215. An output signal from the current detector 2142 may be transmitted to the controller 215. The controller 215 may control the driver 2141 based on the output signal of the current detector 2142.

The stand panel 21 may include the controller 215. The controller 215 may be electrically connected to at least one configuration of the stand panel 21 (e.g., at least one of the battery 211, the solar cell 212, the coil 213, the driver 2141, and the current detector 2142). The controller 215 may be configured to control the operation of at least one configuration of the stand panel 21. The controller 215 may include at least one processor 2151 and at least one memory 2152. The at least one memory 2152 may be configured to store or memorize programs and/or data for controlling the at least one configuration of the stand panel 21. The at least one processor 2151 may output control signals for controlling the at least one configuration of the stand panel 21d in accordance with the program and/or data stored or memorized in the at least one memory 2152.

The stand 20 may include a plurality of legs 22.

Each of the plurality of legs 22 may have a shape extending in one direction. Each of the plurality of legs 22 may include a shape that is substantially straight. For example, the plurality of legs 22 may have substantially the same shape, but the present disclosure is not limited thereto. In some cases, at least a portion of the plurality of legs 22 may be provided with different shapes.

The plurality of legs 22 may be couplable to the stand panel 21. The plurality of legs 22 may be directly coupled to the stand panel 21 or indirectly coupled to the stand panel 21 via a separate configuration (e.g., the hub 23). The plurality of legs 22 may be couplable to the hub 23. The plurality of legs 22 may support the stand panel 21. The plurality of legs 22 may support the hub 23.

A first end 221 of each of the plurality of legs 22 may be couplable to the stand panel 21. For example, the first end 221 of each of the plurality of legs 22 may be couplable to the third coupling portion 218 of the stand panel 21. For example, the first end 221 of each of the plurality of legs 22 may be couplable to the first coupling groove 2181, the second coupling groove 2182, the third coupling groove 2183, the fourth coupling groove 2184, and the fifth coupling groove 2185.

The first end 221 of each of the plurality of legs 22 may be couplable to the hub 23. For example, the first end 221 of each of the plurality of legs 22 may be couplable to a first connection portion 231, a second connection portion 232, a third connection portion 233, and a fourth connection portion 234 of the hub 23, which will be described later.

For example, the first end 221 of each of the plurality of legs 22 may be screw-coupled to the stand panel 21. For example, the first end 221 of each of the plurality of legs 22 may be screw-coupled to the hub 23. For example, the first end 221 of each of the plurality of legs 22 may be threaded. For example, configurations corresponding to the first end 221 of each of the plurality of legs 22 may be threaded. However, the present disclosure is not limited to the examples described above, and the first end 221 of each of the plurality of legs 22 may be coupled to the stand panel 21 and/or the hub 23 through a variety of known coupling methods.

A second end 222 of each of the plurality of legs 22 may be provided to be supported by a floor F. For example, the second end 222 of each of the plurality of legs 22 may be provided with a cap (not shown) to increase friction, and each of the plurality of legs 22 may be configured to be prevented from slipping by the cap.

The second end 222 of each of the plurality of legs 22 may be couplable to the stand panel 21. For example, the second end 222 of each of the plurality of legs 22 may be couplable to the first coupling groove 2181 of the stand panel 21. For example, the second end 222 of each of the plurality of legs 22 may be insertable into the first coupling groove 2181 of the stand panel 21.

For example, the stand 20 may include four legs 22a, 22b, 22c, and 22d. The four legs 22a, 22b, 22c, and 22d may have substantially the same shape, and the four legs 22a, 22b, 22c, and 22d may be indistinguishable. The lower case letters a, b, c, and d after the reference numeral '22' may be written side by side for ease of description. Depending on the state of assembly of the stand 20, all four legs 22a, 22b, 22c, and 22d may be used, or only some of the four legs 22a, 22b, 22c, and 22d may be used.

Meanwhile, the leg 22 may be referred to as a supporting bar. The legs 22 may be referred to as supporting sticks. The legs 22 may be referred to as supporting rods. The legs 22 may be referred to as supporting arms. The legs 22 may be referred to as bars, sticks, rods, arms, or the like.

The stand 20 may include the hub 23.

The hub 23 may be configured to connect the stand panel 21 and the plurality of legs 22. For example, the hub 23 may connect the stand panel 21 and three of the plurality of legs 22. For example, based on the stand 20 including four legs 22, the hub 23 may connect the stand panel 21 to any three of the four legs 22.

The hub 23 may be configured to connect some of the plurality of legs 22 and other portions of the plurality of legs 22. For example, the hub 23 may be configured to connect one leg of the plurality of legs 22 and three legs of the plurality of legs 22. For example, based on the stand 20 including four legs 22, the hub 23 may connect any one leg of the four legs 22 and the remaining three legs 22.

The hub 23 may include a hub body 235. For example, the hub body 235 may include a center of gravity of the hub 23.

The hub 23 may include the first connection portion 231. The first connection portion 231 may protrude upwardly from the hub body 235. For example, the first connection portion 231 may protrude from the hub body 235 along a substantially vertical direction (Z direction).

The hub 23 may include the second connection portion 232. The second connection portion 232 may protrude downwardly from the hub body 235. For example, the second connection portion 232 may be provided to be inclined from the hub body 235. For example, a predetermined angle may be formed between the second connection portion 232 and the first connection portion 231.

The hub 23 may include the third connection portion 233. The third connection portion 233 may protrude downwardly from the hub body 235. The third connection portion 233 may be provided to be spaced apart from the second connection portion 232. For example, the third connection portion 233 may be provided to be inclined from the hub body 235. For example, a predetermined angle may be formed between the third connection portion 233 and the first connection portion 231.

The hub 23 may include the fourth connection portion 234. The fourth connection portion 234 may protrude downwardly from the hub body 235. The fourth connection portion 234 may be provided to be spaced apart from the second connection portion 232. The fourth connection portion 234 may be provided to be spaced apart from the third connection portion 233. For example, the fourth connection portion 234 may be provided to be inclined from the hub body 235. For example, a predetermined angle may be formed between the fourth connection portion 234 and the first connection portion 231.

The second connection portion 232, the third connection portion 233, and the fourth connection portion 234 may extend in different directions from the hub body 235. The second connection portion 232, the third connection portion 233, and the fourth connection portion 234 may have a shape branched in three directions from the first connection portion 231.

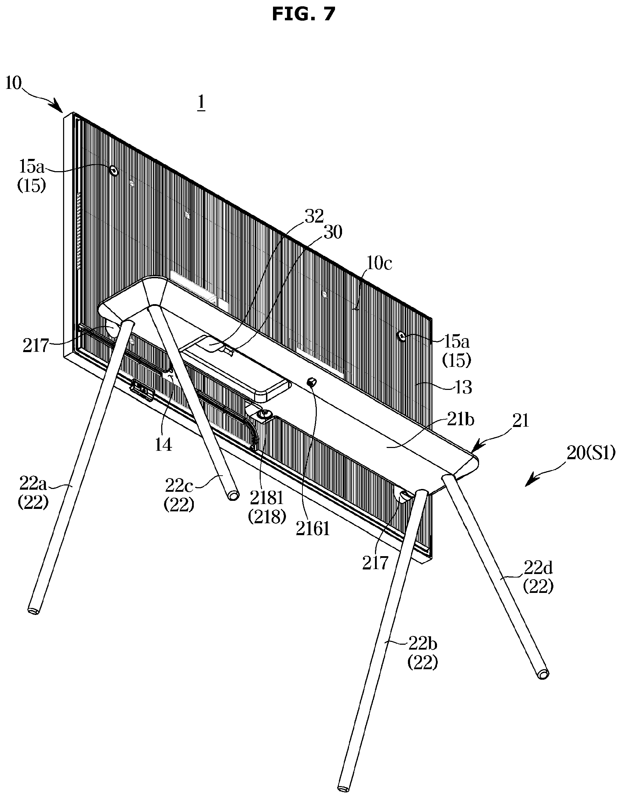

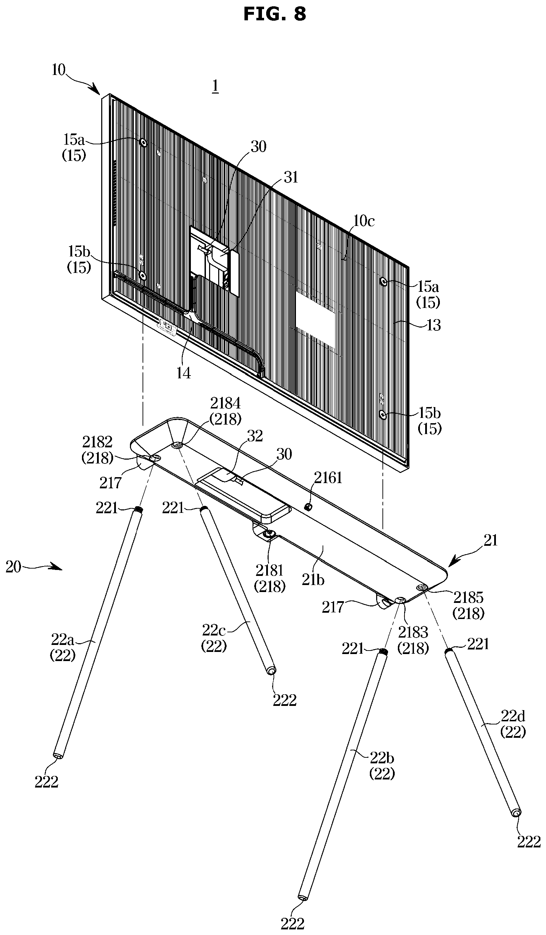

FIG. 6 shows the display apparatus according to an embodiment. FIG. 7 shows the display apparatus shown in FIG. 6 from below. FIG. 8 is an exploded view of the display apparatus shown in FIG. 7. Identical reference numerals may indicate parts or components that perform substantially the same function, and duplicate descriptions may be omitted.

Referring to FIGS. 6 to 8, the stand 20 may be arranged in a first state S 1. The first state S1 of the stand 20 may include a state in which the stand panel 21 stands upright by the four legs 22.

The stand 20 may be arranged in the first state S1 to be able to support the display 10 in four directions. For example, in response to the display 10 being mounted to the stand 20 in the first state S1, the display 10 may be supported by the stand 20 in four directions.

With the stand 20 arranged in the first state S1, each of the four legs 22 of the plurality of legs 22 may be arranged to support the stand panel 21.

With the stand 20 arranged in the first state S1, the four legs 22 may be coupled to the lower side 21b of the stand panel 21 and arranged to support the stand panel 21 in four directions.

With the stand 20 arranged in the first state S1, the first end 221 of each of the four legs 22 of the plurality of legs may be coupled to the lower side 21b of the stand panel 21.

For example, each of the four legs 22 of the plurality of legs may be coupled to each of the coupling grooves 2182, 2183, 2184, and 2185 of the stand panel 21. For example, the first end 221 of the leg 22a may be coupled to the second coupling groove 2182, and the first end 221 of the leg 22b may be coupled to the third coupling groove 2183, the first end 221 of the leg 22c may be coupled to the fourth coupling groove 2184, and the first end 221 of the leg 22d may be coupled to the fifth coupling groove 2185. However, the present disclosure is not limited to the examples described above, and it is sufficient for any four legs 22 of the plurality of legs to correspond to the coupling grooves 2182, 2183, 2184, and 2185 one by one. For example, the first end 221 of the leg 22a may be coupled to the fifth coupling groove 2185.

With the stand 20 arranged in the first state S1, the second ends 222 of the four legs 22 of the plurality of legs may be arranged to form a quadrangle Q. For example, with the stand arranged in the first state S1, the second ends 222 of the four legs 22 of the plurality of legs may be arranged to form a variety of quadrangles, such as a rectangle, a square, a trapezoid, or the like.

With the stand 20 arranged in the first state S1, the second end 222 of each of the four legs 22 of the plurality of legs may be supported by the floor F. As a result, with the stand 20 being in the first state S1, the stand 20 may be in contact with the floor F at four points.

For example, with the stand 20 arranged in the first state S1, the four legs 22 may each protrude from the stand panel 21 in different directions. For example, the four legs 22 may each be coupled to the stand panel 21 at an angle. For example, the four legs 22 may each be arranged to form a predetermined angle with the floor F. However, the present disclosure is not limited to the examples described above.

Meanwhile, in the drawings, with the stand 20 being in the first state S1, the lower coupling portion 15b of the display 10 is shown to be coupled to the second coupling portion 217 of the stand 20, the present disclosure is not limited thereto. For example, the upper coupling portion 15a of the display 10 may be coupled to the second coupling portion 217 of the stand 20. In this case, the four legs 22 may be coupled to the lower side 21b of the stand panel 21 so as not to interfere with the display 10.

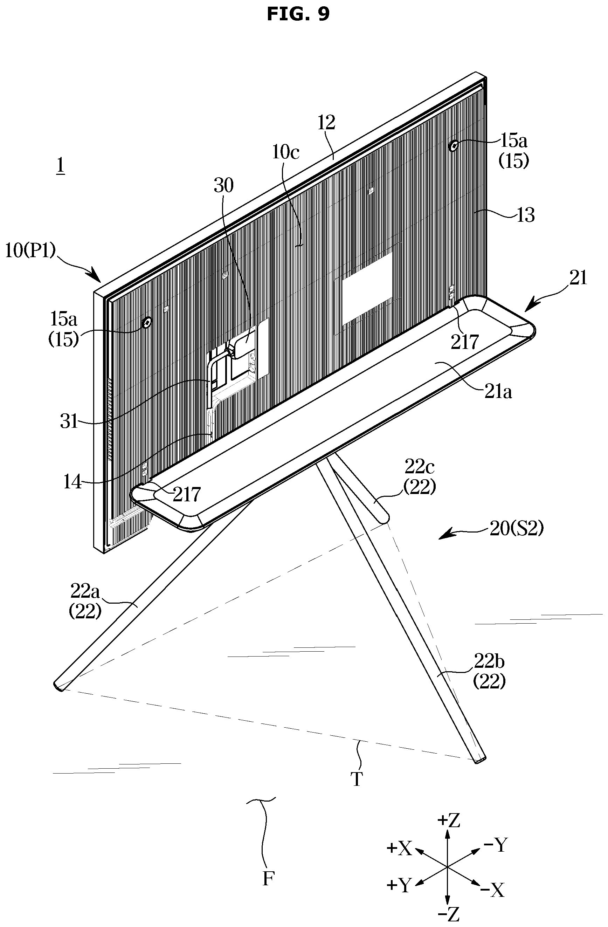

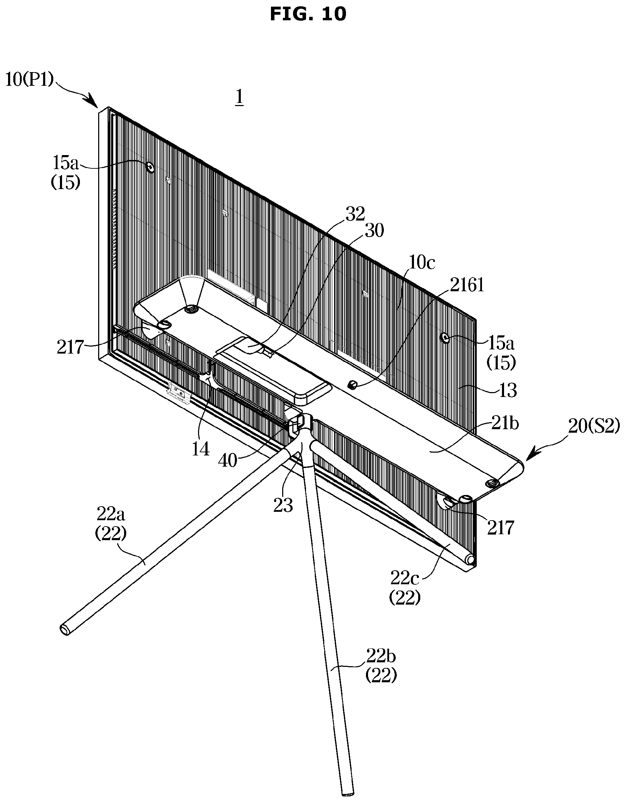

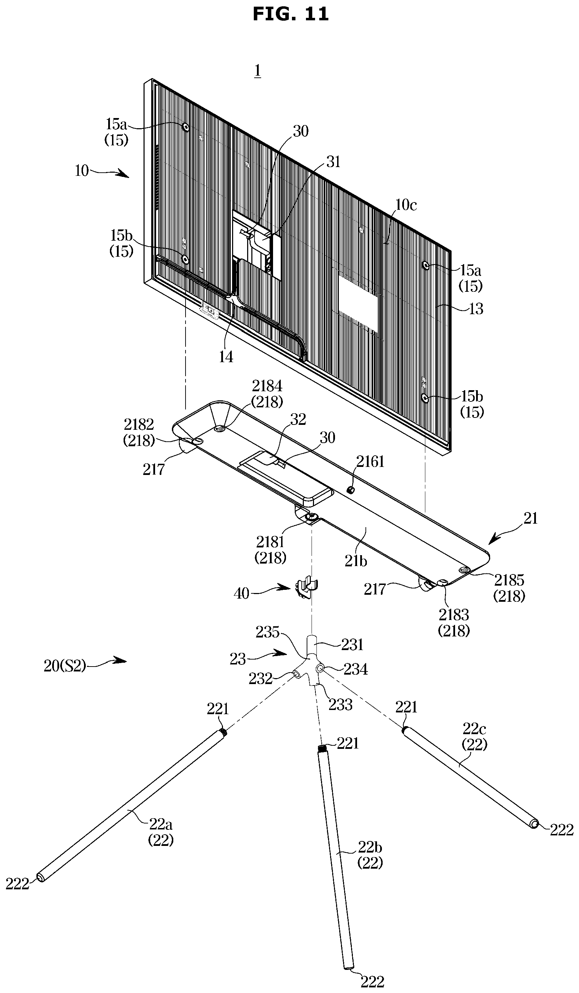

FIG. 9 shows a display apparatus according to an embodiment. FIG. 10 shows the display apparatus shown in FIG. 9 from below. FIG. 11 is an exploded view of the display apparatus shown in FIG. 10. Identical reference numerals may indicate parts or configurations that perform substantially the same function, and duplicate descriptions may be omitted.

Referring to FIGS. 9 to 11, the stand 20 may be arranged in a second state S2. The second state S2 of the stand 20 may include a state in which the stand panel 21 stands upright by the three legs 22.

The stand 20 may be arranged in the second state S2 to be able to support the display 10 in three directions. For example, in response to the display 10 being mounted on the stand 20 in the second state S2, the display 10 may be supported by the stand 20 in three directions.

With the stand 20 arranged in the second state S2, each of the three legs 22 of the plurality of legs 22 may be arranged to support the stand panel 21.

With the stand 20 arranged in the second state S2, the hub 23 may be coupled to the lower side 21b of the stand panel 21, and the three legs 22 may be coupled to a lower side of the hub 23 and arranged to support the hub 23 and the stand panel 21 in three directions.

With the stand 20 arranged in the second state S2, the first end 221 of each of the three legs 22 of the plurality of legs may be coupled to the lower side 21b of the stand panel 21. With the stand 20 arranged in the second state S2, the first end 221 of each of the three legs 22 of the plurality of legs may be coupled to the lower side 21b of the stand panel 21 through the hub 23.

For example, the first connection portion 231 of the hub 23 may be coupled to the first coupling groove 2181 of the stand panel 21. For example, each of the three legs 22 of the plurality of legs may be coupled to each of the second, third, and fourth connection portions 232, 233, and 234 of the hub 23. For example, the first end 221 of the leg 22a may be coupled to the second connection portion 232, the first end 221 of the leg 22b may be coupled to the third connection portion 233, and the first end 221 of the leg 22c may be coupled to the fourth connection portion 234. However, the present disclosure is not limited to the examples described above, and it is sufficient for any three legs of the plurality of legs to correspond to the second, third, and fourth connection portions 232, 233, and 234 of the hub 23 one by one. For example, the first end 221 of the leg 22d not shown in FIGS. 9 to 11 may be coupled to any one of the second, third, and fourth connection portions 232, 233, and 234.

With the stand 20 arranged in the second state S2, the second ends 222 of the three legs 22 of the plurality of legs may be arranged to form a triangle T. For example, with the stand 20 arranged in the second state S2, the second ends 222 of the three legs 22 of the plurality of legs may be arranged to form a triangle of various shapes, such as an equilateral triangle, an isosceles triangle, a right triangle, an obtuse angle, an acute triangle, or the like.

With the stand 20 arranged in the second state S2, the second ends 222 of the three legs 22 of the plurality of legs may be supported by the floor F. As a result, with the stand 20 being in the second state S2, the stand 20 may be in contact with the floor F at three points.

For example, with the stand 20 arranged in the second state S2, the three legs 22 may each protrude from the stand panel 21 in different directions. For example, the three legs 22 may each be coupled to the stand panel 21 at an angle. For example, the three legs 22 may each be arranged to form a predetermined angle with the floor F. However, the present disclosure is not limited to the examples described above.

In contrast to the example shown in the drawings, any three legs 22 of the plurality of legs 22 may be directly coupled to the stand panel 21 to support the stand panel 21. In this case, the hub 23 may be omitted.

The display apparatus 1 may include a retaining clip 40. The retaining clip 40 may be provided to secure the rear side 10c of the display 10 and the stand 10. The retaining clip 40 may be detachably coupled to the guide groove 14 of the display 10. For example, with the stand 20 arranged in the second state S2, the retaining clip 40 may be arranged to surround an outer surface of the first connection portion 231 of the hub 23.

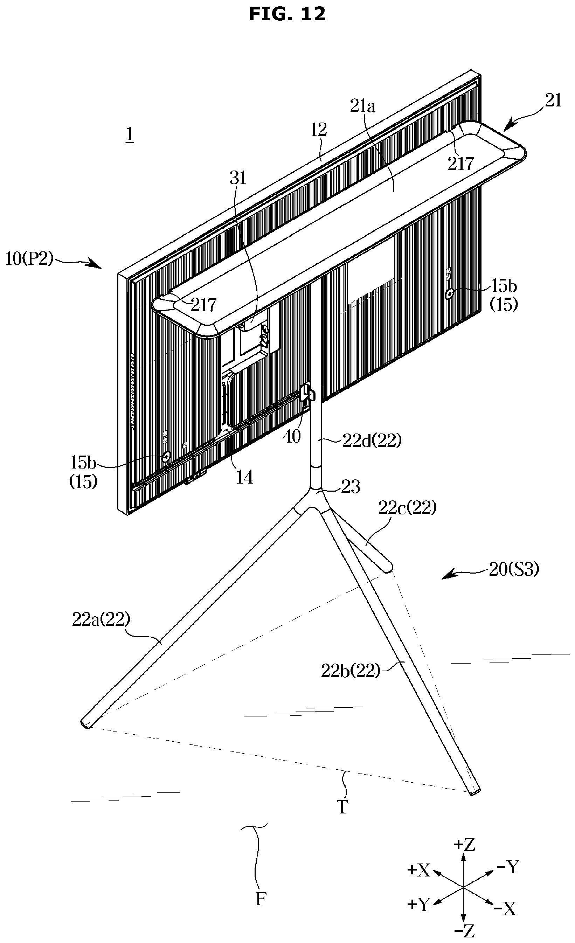

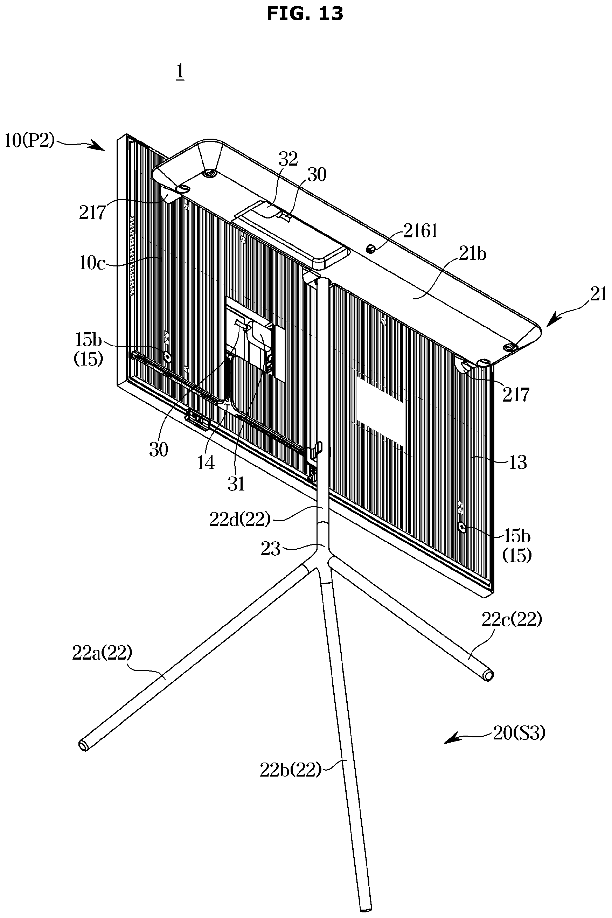

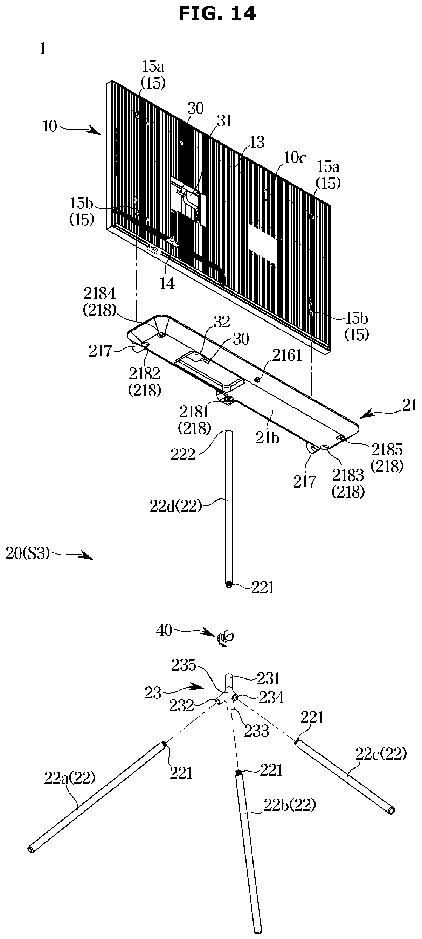

FIG. 12 shows a display apparatus according to an embodiment. FIG. 13 shows the display apparatus shown in FIG. 12 from below. FIG. 14 is an exploded view of the display apparatus shown in FIG. 13. Identical reference numerals may indicate parts or configurations that perform substantially the same function, and duplicate descriptions may be omitted.

Referring to FIGS. 12 to 14, the stand 20 may be arranged in a third state S3. The third state S3 of the stand 20 may include a state in which the stand panel 21 stands upright by the four legs 22, but three of the four legs 22 may be supported by the floor F. For example, the third state S3 of the stand 20 may include a state in which the stand 20 further includes at least one more leg 22 between the hub 23 and the stand panel 21 from the second state S2 of the stand 20.

With the stand 20 arranged in the third state S3, the stand 20 may support the display 10 in three directions. For example, as the display 10 is mounted on the stand 20 in the third state S3, the display 10 may be supported by the stand 20 in three directions.

With the stand 20 arranged in the third state S3, one leg of the plurality of legs 22 may be coupled to the lower side 21b of the stand panel 21. For example, based on the stand 20 with four legs 22, any one of the four legs 22 may be coupled to the lower side 21b of the stand panel 21. For example, the one leg may be arranged to extend along the substantially vertical direction (Z direction). For example, the one leg may be arranged to be upright. For example, the first end 221 of the leg 22d may be coupled to the first connection portion 231 of the hub 23. For example, the second end 222 of the leg 22d may be coupled to the first coupling groove 2181.

With the stand 20 arranged in the third state S3, the hub 23 may be coupled to the lower side of the one leg 22 coupled to the lower side 21b of the stand panel 21. With the stand 20 arranged in the third state S3, the three legs 22 may be coupled to the lower side of the hub 23, except for the one leg 22 coupled to the lower side 21b of the stand panel 21. For example, the first connection portion 231 of the hub 23 may be coupled to the first end 221 of the leg 22d. For example, each of the second, third, and fourth connection parts 232, 233, and 234 of the hub 23 may be coupled to the first end 221 of each of the three legs 22a, 22b, and 22d.

With the stand 20 arranged in the third state S3, each of the three legs of the plurality of legs 22, except for the one leg, may be arranged to support the one leg. For example, each of the three legs may be arranged to support the one leg via the hub 23. For example, based on the stand 20 having four legs 22, any one leg 22 of the four legs 22 may be coupled to an upper side of the hub 23. For example, based on the stand 20 having four legs 22, the remaining three legs 22 of the four legs 22 may be coupled to the lower side of the hub 23. The remaining three legs 22 may be arranged to support the hub 23 and the stand panel 21 in three directions. For example, each of the three legs may be coupled to each of the second, third, and fourth connection portions 232, 233, and 234 of the hub 23. For example, the first end 221 of the leg 22a may be coupled to the second connection portion 232, the first end 221 of the leg 22b may be coupled to the third connection portion 233, and the first end 221 of the leg 22c may be coupled to the fourth connection portion 234.

However, the present disclosure is not limited to the examples described above, and it is sufficient that any one leg of the plurality of legs corresponds to the first connection portion 231 of the hub 23, and the other three legs of the plurality of legs correspond to the second, third, and fourth connection portions 232, 233, and 234 of the hub 23, respectively.

With the stand 20 arranged in the third state S3, the second ends 222 of the three legs of the plurality of legs 22, except for the one leg, may be arranged to form a triangle T. For example, with the stand 20 arranged in the third state S3, the second ends 222 of the three legs of the plurality of legs 22, except for the one leg, may be arranged to form a triangle of various shapes, such as an equilateral triangle, an isosceles triangle, a right triangle, an obtuse angle, an acute triangle, or the like.

With the stand 20 arranged in the third state S3, the second ends 222 of the three legs 22 of the plurality of legs, except for than the one leg, may be supported by the floor F. As a result, with the stand 20 in the third state S3, the stand 20 may be in contact with the floor F at three points.

For example, with the stand 20 arranged in the third state S3, the three legs 22 of the plurality of legs, except for the one leg, may each protrude from the stand panel 21 in different directions. For example, the three legs 22 may each be coupled to the stand panel 21 at an angle. For example, the three legs 22 may each be arranged to form a predetermined angle with the floor F. However, the present disclosure is not limited to the examples described above.

In contrast to the example shown in the drawings, any one leg 22 of the plurality of legs 22 may be coupled to the stand panel 21, and the other three legs 22 of the plurality of legs 22 may also be directly coupled to the one leg 22. In this case, the hub 23 may be omitted.

The display apparatus 1 may include the retaining clip 40. The retaining clip 40 may be provided to secure the rear side 10c of the display 10 and the stand 10. The retaining clip 40 may be detachably coupled to the guide groove 14 of the display 10. For example, with the stand 20 arranged in the third state S3, the retaining clip 40 may be arranged to surround an outer surface of one leg coupled to the stand panel 21.

Here, the ordinal numbers of "first", "second", and "third" do not limit the configuration of the first state S1, the second state S2, and the third state S3. For example, the first state S1 may be referred to as the second state S 1. For example, the first state S1 may be referred to as the third state S 1. For example, the second state S2 may be referred to as the first state S2. For example, the second state S2 may be referred to as the third state S2. For example, the third state S3 may be referred to as the first state S3. For example, the third state S3 may be referred to as the second state S3.

Referring to FIGS. 6 to 14, the stand 20 may be arranged in different states S1, S2, and S3. The stand 20 may be capable of switching between different states. For example, the stand 20 may be switchable from the first state S1 to the second state S2 or the third state S3. For example, the stand 20 may be switchable from the second state S2 to the first state S1 or the third state S3. For example, the stand 20 may be switchable from the third state S3 to the first state S1 or the second state S2. Depending on the respective state of the stand 20, the assembly configuration of the stand 20 may vary. As a result, the stand 20 may be used in a variety of spaces and/or environments. The stand 20 may be arranged in different states according to the user's needs. The ease of use of the stand 20 may be improved.

On the other hand, the height of the display 10 may be adjustable by the stand 20. For example, the height of the display 10 may vary depending on the coupled position of the display 10 and the stand 20. For example, the height of the display 10 may be set to vary depending on the coupled position of the display 10 and the stand 20. For example, the height of the display 10 may vary depending on the assembled state of the stand 20.

With the stand 20 arranged in the second state S2, the display 10 may be positioned in a first position P1. At this time, the lower coupling portion 15b of the display 10 and the second coupling portion 217 of the stand 20 may be coupled together. With the stand 20 arranged in the second state S3, the display 10 may be positioned in a second position P2, which is higher than the first position P1. At this time, the upper coupling portion 15a of the display 10 and the second coupling portion 217 of the stand 20 may be coupled together. For example, a distance between the display 10 and the floor F when the display 10 is in the first position P1 may be less than the distance between the display 10 and the floor F when the display 10 is in the second position P2. With the coupling of the lower coupling portion 15b of the display 10 and the second coupling portion 217 of the stand 20, the display 10 may be positioned in a relatively low position. With the coupling of the upper coupling portion 15a of the display 10 and the second coupling portion 217 of the stand 20, the display 10 may be positioned in a relatively high position. Depending on which of the upper coupling portion 15a and the lower coupling portion 15b is coupled to the second coupling portion 217, the height of the display 10 may be adjustable.

However, the present disclosure is not limited to what is shown in the drawings. The position of the first coupling portion 15 of the display 10 may vary. The position of the upper coupling portion 15a may vary. The position of the lower coupling portion 15b may vary. As the position of the upper coupling portion 15a and the lower coupling portion 15a is varied, the height of the display 10 may also be varied. In addition to the upper coupling portion 15a and the lower coupling portion 15a, an additional coupling portion may be further provided. For example, the first coupling portion 15 may include a middle coupling portion (not shown) positioned between the upper coupling portion 15a and the lower coupling portion 15b. For example, when the middle coupling portion is coupled to the second coupling portion 217, the display 10 may be positioned between the first position P1 and the second position P2.

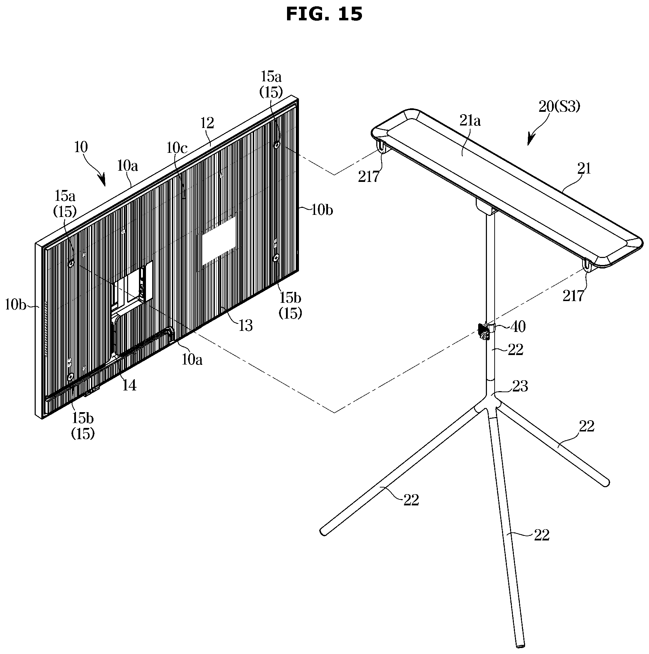

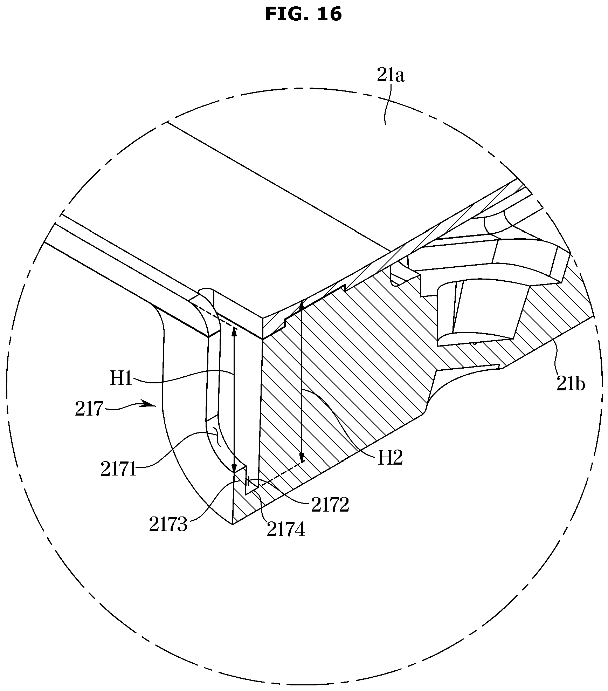

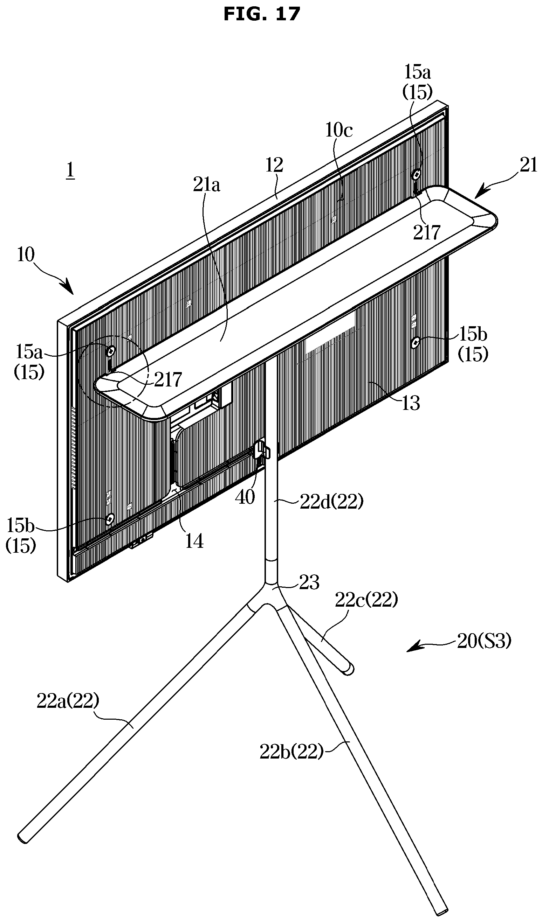

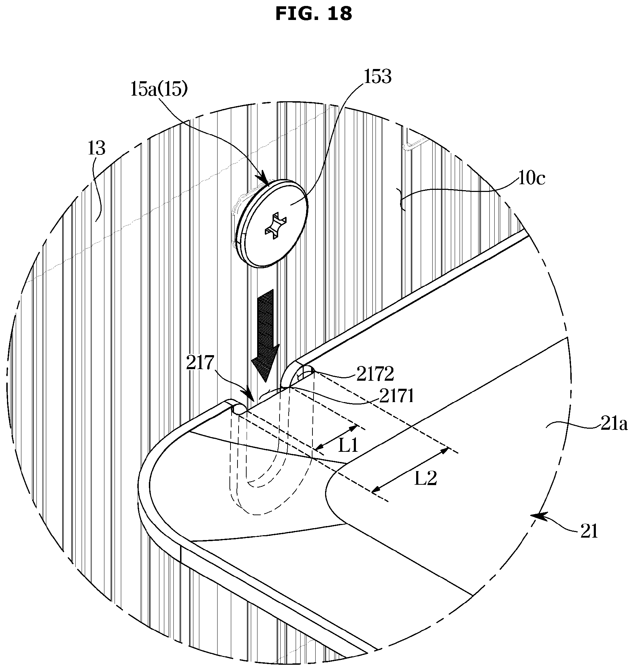

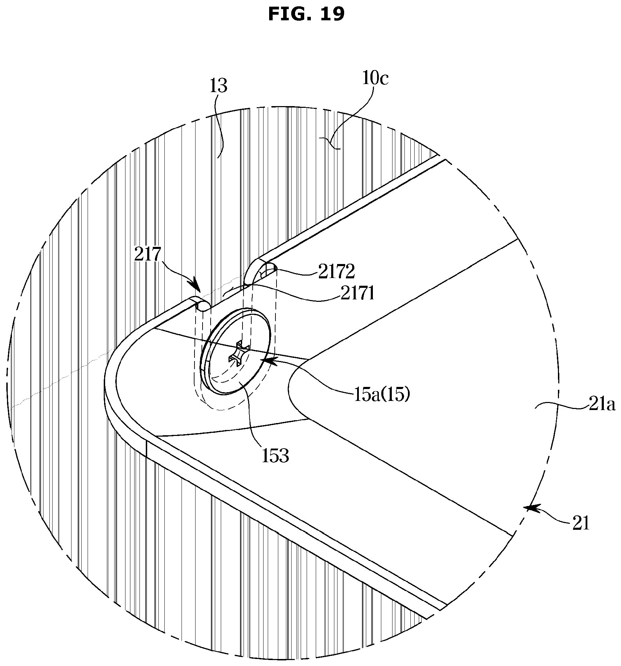

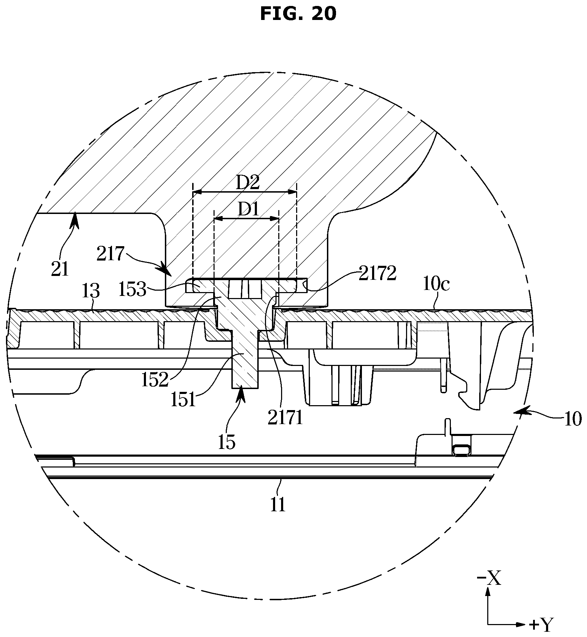

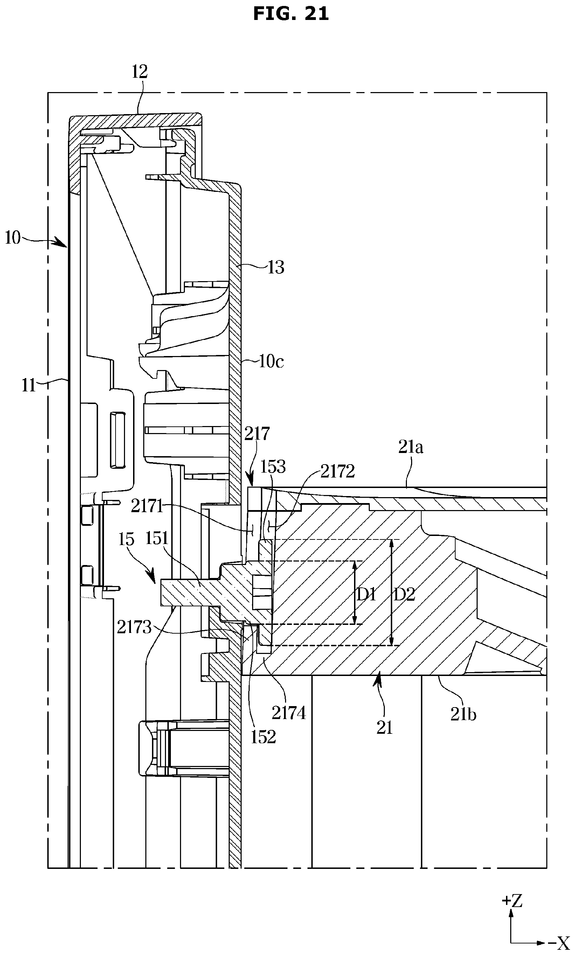

FIG. 15 shows a display and a stand according to an embodiment. FIG. 16 is a partial cut away view of the stand according to an embodiment. FIG. 17 shows a display and a stand coupled together, according to an embodiment. FIG. 18 shows an enlarged view of a portion of FIG. 17. FIG. 19 shows the display and the stand shown in FIG. 18 coupled together. FIG. 20 shows a plan cross-section of the display and the stand coupled, according to an embodiment. FIG. 21 shows a side cross-section view of the display and the stand coupled, according to an embodiment. Identical reference numerals may indicate parts or configurations that perform substantially the same function, and duplicate descriptions may be omitted.

FIGS. 15 to 21 show an example of when which the stand 20 is arranged in the third state S3. FIGS. 15 to 21 show an example of when the upper coupling portion 15a and the second coupling portion 217 are coupled together. The coupling relationship (and/or coupling method) between the first coupling portion 15 and the second coupling portion 217 may also be applicable when the stand 20 is arranged in the first state S1 or the second state S2. The coupling relationship (and/or coupling method) between the upper coupling portion 15a and the second coupling portion 217 may also be applicable to the coupling relationship (and/or coupling method) between the lower coupling portion 15b and the second coupling portion 217. The following description of the first coupling portion 15 may be applicable to both the upper coupling portion 15a and the lower coupling portion 15b. The following description of the first coupling portion 15 may be replaced by a description of the upper coupling portion 15a or a description of the lower coupling portion 15b.

Referring to FIGS. 15 to 21, the first coupling portion 15 of the display 10 may correspond to the second coupling portion 217 of the stand 20. The first coupling portion 15 of the display 10 may be detachably couplable to the second coupling portion 217 of the stand 20.

The first coupling portion 15 may be arranged on the rear side 10c of the display 10. The first coupling portion 15 may be arranged to protrude from the cover 13. The first coupling portion 15 may be arranged to protrude from an outer side of the cover 13. The first coupling portion 15 may be arranged to face the stand 20. For example, a portion of the first coupling portion 15 may be arranged on inner side of the cover 13, and the remaining portion of the first coupling portion 15 may be arranged on the outer side of the cover 13. For example, a portion of the first coupling portion 15 may be arranged to be covered by the cover 13, and the remaining portion of the first coupling portion 15 may be arranged to be exposed to the outside of the cover 13. For example, the first coupling portion 15 may be formed integrally with the cover 13 or may be arranged to be detachably coupled to the cover 13.

For example, the first coupling portion 15 may include a coupling body 151. The coupling body 151 may be inserted into the cover 13. The coupling body 151 may be provided to be positioned on the inner side of the cover 13. The coupling body 151 may be arranged such that it is not exposed to the outside of the cover 13.

For example, the first coupling portion 15 may include a coupling neck 152. The coupling neck 152 may extend from the coupling body 151. The coupling neck 152 may be arranged to be positioned on the outer side of the cover 13. The coupling neck 152 may be arranged to protrude outwardly from the cover 13. The coupling neck 152 may be arranged to be exposed to the outside of the cover 13. The coupling neck 152 may be arranged between the coupling body 151 and a coupling head 153, which will be described later.

For example, the first coupling portion 15 may include the coupling head 153. The coupling head 153 may extend from the coupling neck 152. The coupling head 153 may be arranged to be positioned on the outer side of the cover 13. The coupling head 153 may be arranged to protrude outwardly from the cover 13. The coupling head 153 may be arranged to be spaced apart from the cover 13. The coupling head 153 may be spaced apart from the cover 13 by a length that the coupling neck 152 protrudes from the cover 13.

For example, the coupling head 153 may have a larger size than the coupling neck 152. For example, the diameter D2 of the coupling head 153 may be provided to be larger than the diameter D1 of the coupling neck 152. However, the present disclosure is not limited thereto, and the coupling head 153 may have approximately the same size as the coupling neck 152.

For example, the first coupling portion 15 may be provided as a screw. For example, the first coupling portion 15 may be provided as a bolt. For example, the first coupling portion 15 may be provided as a hook. However, the present disclosure is not limited to the examples described above, and the first coupling portion 15 may include a variety of known fastening components. In addition, the shape and/or type of the first coupling portion 15 is not limited as long as the first coupling portion 15 is provided as a configuration of the display 10 and is couplable to the second coupling portion 217.

The second coupling portion 217 may be disposed on the stand panel 21. The second coupling portion 217 may be formed on a front side of the stand panel 21. The second coupling portion 217 may be arranged to face the rear side 10c of the display 10. The second coupling portion 217 may be arranged to receive at least a portion of the first coupling portion 15. The second coupling portion 217 may be arranged to receive a portion (e.g., coupling neck 152 and/or coupling head 153) protruding from the cover 13 of the first coupling portion 15. The second coupling portion 217 may be arranged to support a portion (e.g., coupling neck 152 and/or coupling head 153) protruding from the cover 13 of the first coupling portion 15.

For example, the second coupling portion 217 may include a first coupling groove 2171. The first coupling groove 2171 may correspond to the coupling neck 152. The first coupling groove 2171 may have a shape corresponding to the coupling neck 152. The first coupling groove 2171 may receive the coupling neck 152. The first coupling groove 2171 may have an open top shape. The first coupling groove 2171 may be open toward the rear side 10c of the display 10. The first coupling groove 2171 may be open toward the cover 13 of the display 10. A length H1 along the vertical direction (Z direction) of the first coupling groove 2171 may be equal to the diameter D1 of the coupling neck 152 or may be greater than the diameter D1 of the coupling neck 152 (see FIGS. 16 and 21). A length L1 along the horizontal direction (Y direction) of the first coupling groove 2171 may be equal to the diameter D1 of the coupling neck 152 or may be greater than the diameter D1 of the coupling neck 152 (see FIGS. 18 and 20).

For example, the second coupling portion 217 may include a first support portion 2173. The first support portion 2173 may be provided to define the first coupling groove 2171. The first support portion 2173 may be arranged to support the coupling neck 152 received in the first coupling groove 2171. The first support portion 2173 may be arranged to contact the coupling neck 152 received in the first coupling groove 2171. The coupling neck 152 may be seated on the first support portion 2173.

For example, the second coupling portion 217 may include a second coupling groove 2172. The second coupling groove 2172 may correspond to the coupling head 153. The second coupling groove 2172 may have a shape corresponding to the coupling head 153. The second coupling groove 2172 may receive the coupling head 153. The second coupling groove 2172 may have an open top shape. The second coupling groove 2172 may communicate with the first coupling groove 2171. A length H2 along the vertical direction (Z direction) of the second coupling groove 2172 may be equal to the diameter D2 of the coupling head 153 or may be greater than the diameter D2 of the coupling head 153 (see FIGS. 16 and 21). A length L2 along the horizontal direction (Y direction) of the second coupling groove 2172 may be equal to the diameter D2 of the coupling head 153 or may be greater than the diameter D2 of the coupling head 153 (see FIGS. 18 and 20).

For example, the second coupling portion 217 may include a second support portion 2174. The second support portion 2174 may be provided to define the second coupling groove 2172. The second support portion 2174 may be arranged to support the coupling head 153 received in the second coupling groove 2172. The second support portion 2174 may be arranged to contact the coupling head 153 received in the second coupling groove 2172. The coupling head 153 may be seated on the second support portion 2174.

Next, with reference to FIGS. 17 to 21, as an example, a coupling operation between the first coupling portion 15 of the display 10 and the second coupling portion 217 of the stand 20 will be described.

When the first coupling portion 15 of the display 10 is coupled to the second coupling portion 217 of the stand 20, the display 10 may be supported by the stand 20. Because the first coupling portion 15 of the display 10 is coupled to the second coupling portion 217 of the stand 20, the display 10 may be mounted on the stand 20. The first coupling portion 15 of the display 10 may be mounted to the second coupling portion 217 of the stand 20. The first coupling portion 15 of the display 10 may be provided to hang the second coupling portion 217 of the stand 20.

As the display 10 moves (e.g., slidably) downwardly relative to the stand 20, the first coupling portion 15 may be arranged to be coupled to the second coupling portion 217. For example, with the first coupling portion 15 positioned above the second coupling portion 217, as the display 10 moves downwardly relative to the stand 20, the first coupling portion 15 may be arranged to be caught by the second coupling portion 217. For example, as the display 10 moves downwardly with respect to the stand 20, at least a portion of the first coupling portion 15 may be arranged to be inserted into the second coupling portion 217. For example, as the display 10 slidably moves downwardly with respect to the stand 20, at least a portion of the first coupling portion 15 may be arranged to be inserted into the second coupling portion 217. For example, the coupling neck 152 may be inserted into the first coupling groove 2171. For example, the coupling neck 152 may be inserted into the first coupling groove 2171. For example, the coupling neck 152 inserted into the first coupling groove 2171 may be supported by the first support portion 2173. For example, the coupling head 153 may be inserted into the second coupling groove 2172. For example, the coupling head 153 may be inserted into the second coupling groove 2172. For example, the coupling head 153 inserted into the second coupling groove 2172 may be supported by the second support portion 2174.

In contrast to the above, as the display 10 moves (e.g., slidably) upwardly relative to the stand 20, the first coupling portion 15 may be arranged to be separated from the second coupling portion 217. For example, with at least a portion of the first coupling portion 15 received in the second coupling portion 217, as the display 10 moves upwardly relative to the stand 20, the first coupling portion 15 may be arranged to be separated from the second coupling portion 217. For example, as the display 10 moves upwardly relative to the stand 20, at least a portion of the first coupling portion 15 may be arranged to be withdrawn from the second coupling portion 217. For example, as the display 10 slidably moves upwardly relative to the stand 20, at least a portion of the first coupling portion 15 may be arranged to be withdrawn from the second coupling portion 217. For example, the coupling neck 152 may be removed from the first coupling groove 2171. For example, the coupling head 153 may be removed from the second coupling groove 2172.

A user may hang the display 10 on the stand 20 with the first coupling portion 15 of the display 10 and the second coupling portion 217 of the stand 20 aligned, thereby coupling the display 10 and the stand 20. The user may separate the display 10 and the stand 20 by lifting the display 10 from the stand 20. According to the present disclosure, no separate fasteners, tools, or the like may be required to assemble or disassemble the display 10 and the stand 20. The user may easily couple and/or uncouple the display 10 and the stand 20. As a result, the usability of the display apparatus 1 may be increased.

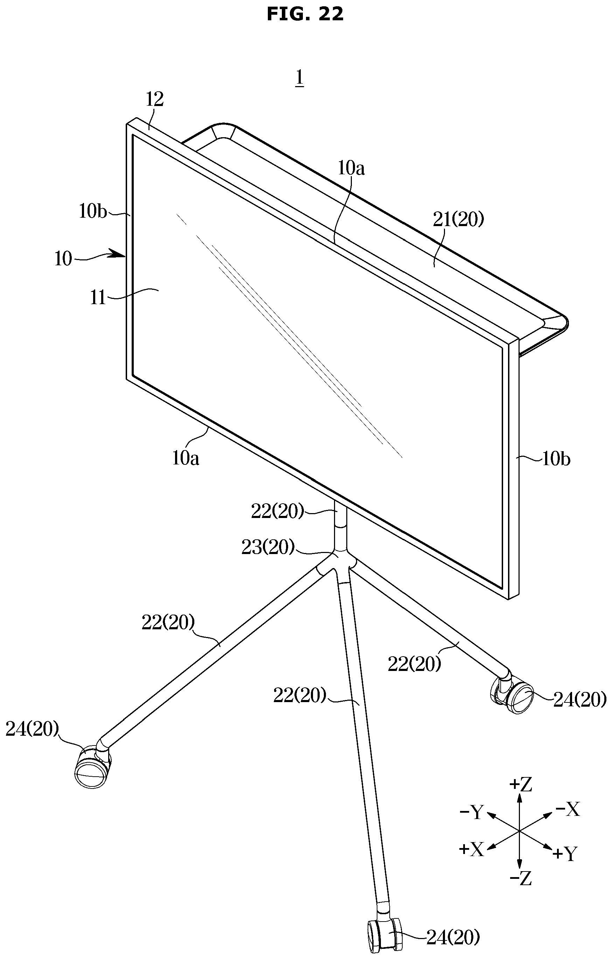

FIG. 22 shows a display apparatus according to an embodiment. Identical reference numerals may indicate parts or configurations that perform substantially the same function, and duplicate descriptions may be omitted.

Referring to FIG. 22, the display apparatus 1 may be provided to be movable. The stand 20 may further include wheels 24. The stand 20 may be provided to be movable by being provided with wheels 24. The wheels 24 may be arranged to rotate on the floor F. The wheels 24 may each be coupled to one end of each of the plurality of legs 22. For example, the wheel 24 may be couplable to the second end 222 of each of the plurality of legs 22.

In FIG. 22, the stand 20 is shown as further including the wheels 24 in a state in which the display 10 may be supported in three directions, but the present disclosure is not limited thereto. In an example, the stand 20 may further include the wheels 24 in a state in which the display 10 is supportable in four directions. For example, with the stand 20 arranged in the first state S 1, the wheels 24 may be coupled to each of the four legs 22a, 22b, 22c, and 22d (see FIGS. 6 and 7). For example, with the stand 20 arranged in the second state S2, the wheels 24 may be couplable to each of the three legs 22a, 22b, and 22c (see FIGS. 9 and 10). For example, with the stand 20 arranged in the third state S3, the wheels 24 may be couplable to each of the three legs 22a, 22b, and 22c (see FIGS. 12 and 13).

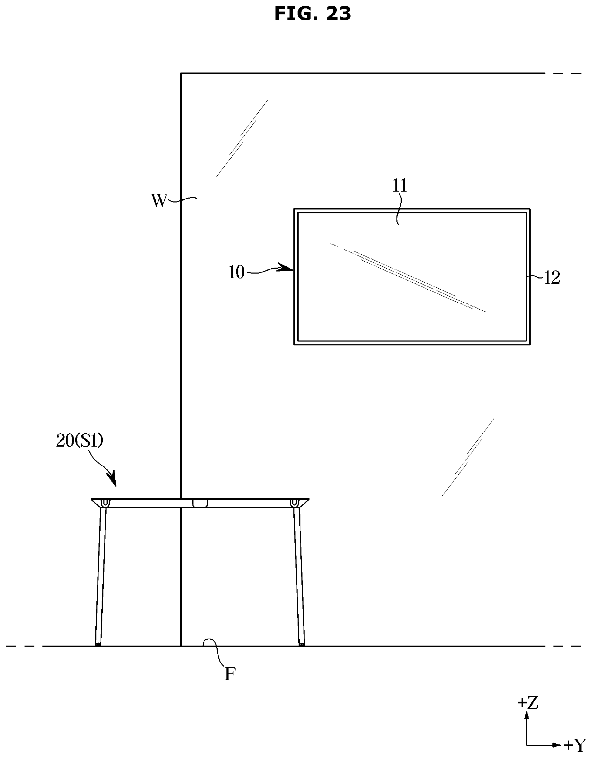

FIG. 23 shows a display and a stand, according to an embodiment. Identical reference numerals may indicate parts or configurations that perform substantially the same function, and duplicate descriptions may be omitted.

Referring to FIG. 23, the display 10 and the stand 20 may each be used alone. In other words, the stand 20 may not support the display 10. For example, the display 10 may be mounted on a structure (e.g., a wall W). For example, the stand 20 may be used as a separate product from the display 10. For example, the display 10 and the stand 20 may be disposed in different spaces. For example, one of the display 10 and the stand 20 may be placed indoors and the other may be placed outdoors.

In addition to the function of supporting the display 10, the stand 20 may also perform other functions. For example, the stand 20 may be used as a shelf. For example, the stand 20 may be provided to place various items. For example, various items may be displayed on the stand 20. For example, the stand 20 may be used as an energy storage device. For example, the stand 20 may provide wireless power to an electronic device (not shown) placed on the stand 20. For example, the stand 20 may be used as a power generation device. For example, the stand 20 may generate power from solar energy. Finally, the usability of the stand 20 may be increased. The degree of freedom of the stand 20 may be increased. The stand 20 may be used in a variety of spaces and/or environments. The usability of the stand 20 may be improved.

In FIG. 23, the stand 20 is shown as in the first state S1, but the present disclosure is not limited thereto. For example, the stand 20 may be arranged in the second state S2 and used alone. For example, the stand 20 may be arranged in the third state S3 and used alone. In addition, as shown in FIG. 22, the stand 20 may include the wheels 24, and the stand 20 may be independently movable.

According to an embodiment, the display apparatus 1 may include the display 10, and the stand 20 on which the display is mountable. The stand 20 may include the stand panel 21 couplable to the rear side 10c of the display. The stand 20 may include the plurality of legs 22 couplable to the stand panel. The stand may be arranged in the first state S1 supportable for the display in four directions, wherein each of four legs of the plurality of legs is configured to support the stand panel. The stand may be arranged in the second state S2 supportable for the display in three directions, wherein each of three legs of the plurality of legs is configured to support the stand panel. The stand 20 may be capable of switching between the first state S I and the second state S2.

While the stand 20 is provided in the first state S1, the first ends 221 of the four legs of the plurality of legs may each be coupled to the lower side 21b of the stand panel 21. Based on the stand 20 arranged in the first state S 1, the second ends 222 of the four legs of the plurality of legs may be configured to form the quadrangle Q.

While the stand 20 is provided in the second state S2, the first ends 221 of the three legs of the plurality of legs may each be coupled to the lower side 21b of the stand panel 21. Based on the stand 20 arranged in the second state S2, the second ends 222 of the three legs of the plurality of legs may be configured to form the triangle T.

The stand 20 may be switchable from the first state S1 or the second state S2 to the third state S3. The stand 20 may be switchable from the third state S3 to the first state S 1 or the second state S2. While the stand 20 is provided in the second state S2, the display 10 may be positioned in the first position P1. While the stand 20 is provided in the third state S3, the stand 20 may be capable of supporting the display 10 in three directions and the display 10 may be positioned in the second position P2 higher than the first position P1.

While the stand 20 is provided in the third state S3, one leg of the plurality of legs may be coupled to the lower side 21b of the stand panel 21. While the stand 20 is provided in the third state S3, each of the three legs of the plurality of legs, except for the one leg, may be configured to support the one leg.

The stand 20 may further include the hub 23. The hub 23 may connect the stand panel and the three legs of the plurality of legs while the stand 20 is provided in the second state S2. The hub 23 may connect the one leg of the plurality of legs and the three legs of the plurality of legs while the stand 20 is provided in the third state S3.

The hub 23 may include the hub body 235, the first connection portion 231 protruding upwardly from the hub body 235, the second connection portion 232 protruding downwardly from the hub body 235, the third connection portion 233 protruding downwardly from the hub body 235 and spaced apart from the second connection portion, and the fourth connection portion 234 protruding downwardly from the hub body 235 and spaced apart from the second connection portion and the third connection portion.

The stand panel 21 may be electrically connectable to the display 10.

The stand panel 21 may further include the battery 211 configured to supply power to the display 10.

The stand panel 21 may further include the solar cell 212 configured to generate power from sunlight.

The stand panel 21 may be configured to wirelessly charge at least one electronic device placed on the stand panel 21.

The display 10 may include the display panel 11 configured to display an image, the cover 13 configured to cover a rear side of the display panel 11, and the first coupling portion 15 protruding from the cover. The stand panel 21 may include the second coupling portion 217 capable of receiving at least a portion of the first coupling portion.

In response to the display 10 slidably moving downwardly relative to the stand 20, the at least a portion of the first coupling portion 15 may be configured to be inserted into the second coupling portion 217. In response to the display slidably moving upwardly relative to the stand, the at least a portion of the first coupling portion 15 may be configured to be removed from the second coupling portion 217.

The first coupling portion 15 may include the coupling body 151 inserted into the cover, the coupling neck 152 extending from the coupling body, and the coupling head 153 extending from the coupling neck and having a larger size than the coupling neck. The second coupling portion 217 may include the first coupling groove 2171 capable of receiving the coupling neck 152, and the second coupling groove 2172 capable of receiving the coupling head 153.

The display 10 may include the pair of long sides 10a and the pair of short sides 10b. The stand panel 21 may extend along the long side 10a of the display 10.

According to an embodiment, the stand 20 on which the display 10 is mountable may include the stand panel 21 couplable to the display, four supporting bars 22 supportable for the stand panel 21, and the hub 23. The hub 23 may be connectable to one supporting bar of the four supporting bars and the remaining three supporting bars. The hub 23 may be connectable to the stand panel and three supporting bars of the four supporting bars.

The four supporting bars may be coupled to the lower side 21b of the stand panel 21 to support the stand panel in four directions.

The hub 23 may be coupled to the lower side 21b of the stand panel 21. The three supporting bars of the four supporting bars may be coupled to the lower side of the hub and may be configured to support the hub 23 and the stand panel 21 in three directions.

The one supporting bar of the four supporting bars may be arranged to extend along the vertical direction (Z direction) and be coupled to the lower side 21b of the stand panel 21. The hub 23 may be coupled to the lower side of the one supporting bar. The remaining three supporting bars of the four supporting bars may be coupled to the lower side of the hub and may be configured to support the hub 23 and the stand panel 21 in three directions.

The stand 20 may further include wheels 24 couplable to one end of each of the plurality of legs 22.

According to the spirit of the present disclosure, the usability of the stand and the display apparatus including the same may be improved.

According to the spirit of the present disclosure, the stand may be converted into various states.

According to the spirit of the present disclosure, the stand may be used in a variety of spaces and/or environments.

According to the spirit of the present disclosure, the stand may not only support the display, but may also perform various functions, such as supplying power to the display, placing various items thereon, charging at least one electronic device, or generating power from sunlight.

The effects to be obtained from the present disclosure are not limited to those mentioned above, and other effects not mentioned will be apparent to those skilled in the art to which the present disclosure belongs from the following description.

Although certain exemplary embodiments are illustrated and described above, the present disclosure is not limited to the certain embodiments, various applications may of course be performed by those skilled in the art without deviating from what is claimed in the scope of claims, and such applications should not be understood separately from the technical idea or prospects herein.

## Claims

1. A display apparatus comprising:
a display; and
a stand on which the display is mountable, the stand including:
a stand panel couplable to the display; and
a plurality of legs couplable to the stand panel;
wherein the stand is configured to be switchable between:
a first state which each of four legs of the plurality of legs is coupled to the stand panel and is configured to support the stand panel so that the display is supported in four directions of the four legs, respectively; and
a second state which each of three legs of the plurality of legs is coupled to the stand panel and is configured to support the stand panel so that the display is supported in three directions of the three legs, respectively.

2. The display apparatus of claim 1, wherein, while the stand is in the first state, first ends of the four legs of the plurality of legs are each coupled to a lower side of the stand panel, and second ends of the four legs of the plurality of legs form a quadrangle.

3. The display apparatus of claim 1, wherein, while the stand is in in the second state, first ends of the three legs of the plurality of legs are each coupled to a lower side of the stand panel, and second ends of the three legs of the plurality of legs form a triangle.

4. The display apparatus of claim 1, wherein
the stand is switchable from the first state to a third state or the second state to the third state, and is switchable from the third state to the first state or the third state to the second state,
while the stand is in the second state, the display is positioned in a first position, and
while the stand is in the third state, each of three legs of the plurality of legs is coupled to the stand panel and is configured to support the stand panel so that the display is supported in three directions of the three legs, respectively, and the display is positioned in a second position which is higher than the first position.

5. The display apparatus of claim 4, wherein, while the stand is in the third state, one leg of the plurality of legs is coupled to a lower side of the stand panel, and each of the three legs of the plurality of legs, except for the one leg, supports the one leg.

6. The display apparatus of claim 5, wherein the stand further comprises a hub configured to connect to the stand panel and to the three legs of the plurality of legs while the stand is in the second state, or to connect to the one leg of the plurality of legs and to the three legs of the plurality of legs while the stand is in the third state.

7. The display apparatus of claim 6, wherein the hub comprises:
a hub body,
a first connection portion protruding upwardly from the hub body,
a second connection portion protruding downwardly from the hub body,
a third connection portion protruding downwardly from the hub body and spaced apart from the second connection portion, and
a fourth connection portion protruding downwardly from the hub body and spaced apart from the second connection portion and the third connection portion.

8. The display apparatus of claim 1, wherein the stand panel is electrically connectable to the display.

9. The display apparatus of claim 8, wherein the stand panel further comprises a battery configured to supply power to the display.

10. The display apparatus of claim 9, wherein the stand panel further comprises a solar cell configured to generate power from sunlight to charge the battery.

11. The display apparatus of claim 8, wherein the stand panel is configured to wirelessly charge at least one electronic device placed on the stand panel.

12. The display apparatus of claim 1, wherein
the display comprises:
a display panel configured to display an image;
a cover configured to cover a rear side of the display panel; and
a first coupling portion protruding from the cover,
the stand panel comprises:
a second coupling portion configured to receive at least a portion of the first coupling portion.

13. The display apparatus of claim 12, wherein
in response to the display slidably moving downwardly relative to the stand, at least a portion of the first coupling portion is configured to be inserted into the second coupling portion, and
in response to the display slidably moving upwardly relative to the stand, at least a portion of the first coupling portion is configured to be removed from the second coupling portion.

14. The display apparatus of claim 12, wherein
the first coupling portion comprises:
a coupling body inserted into the cover,
a coupling neck extending from the coupling body, and
a coupling head extending from the coupling neck and having a larger size than a size of the coupling neck,
the second coupling portion comprises:
a first coupling groove to receive the coupling neck, and
a second coupling groove to receive the coupling head.

15. The display apparatus of claim 1, wherein
the display includes a pair of long sides and a pair of short sides, and
the stand panel extends along a long side direction of the display.
